# EUROPÄISCHE PATENTANMELDUNG

(11) **EP 1 560 095 A2**
(43) Veröffentlichungstag der Anmeldung: **03.08.2005**
(21) Anmeldenummer: 05001277.2
(22) Anmeldetag: 21.01.2005
(51) Int. Cl.: G05B 19/418, B41F 33/00, B41F 13/004

(54) **Bussystem zur Steuerung einer Komponente einer Druckmaschine und entsprechendes Verfahren**

(30) Priorität: 30.01.2004 DE 102004004843
(71) Anmelder: SIEMENS AKTIENGESELLSCHAFT, 80333 München (DE)
(72) Erfinder: Agne, Werner, 90552 Röthenbach (DE); Blumenstock, Werner, 91085 Weisendorf (DE); Schlinkert, Jochen, 91315 Höchstadt/Aisch (DE)

(57) **Zusammenfassung**

Die Ausfallzeiten eines Druckwerks in der Druckindustrie sollen reduziert werden. Daher ist vorgesehen, die Antriebsregler (3) eines Druckwerks (1) gleichzeitig mit mehreren Taktsignalen zu versorgen. Jeder der Antriebsregler (3) wählt eines der Taktsignale zur Synchronisation selbständig aus. Bei Ausfall einer Signalquelle wird das Druckwerk nicht unterbrochen, sondern die Antriebsregler (3) schalten automatisch auf den noch anliegenden Takt.

## Beschreibung

Die vorliegende Erfindung betrifft ein Bussystem zur Steuerung einer Komponente einer Druckmaschine mit mehreren Slaves als Buskomponenten und einer Takterzeugungseinrichtung zur Ausgabe eines ersten Taktsignals und eines zweiten Taktsignals an die mehreren Slaves. Darüber hinaus betrifft die vorliegende Erfindung ein entsprechendes Verfahren zum Betreiben eines Bussystems.

Ein Druckwerk besteht aus mehreren Druckwalzen, die vorzugsweise individuell angesteuert werden. Hierzu werden für jeden Druckzylinder bzw. jede Druckwalze ein Antriebsregler benötigt. Die Antriebsregler werden über ein taktsynchrones Bussystem angesteuert.

Der Ausfall eines Druckwerks kann für ein Unternehmen ein massives wirtschaftliches Problem darstellen. Daher werden in dem taktsynchronen Bussystem zur Ansteuerung der Antriebsregler wenn möglich mehr als ein Synchronisationstaktmaster eingesetzt. Als Synchronisationstaktmaster werden Antriebssteuerungen bzw. -regler eingesetzt. Bei Bedarf, z. B. bei Ausfall eines Synchronisationstaktmasters, kann dann zwischen diesen Mastern umgeschaltet werden. Dieses Umschalten erfolgt beispielsweise mit Hilfe einer Umlaufliste innerhalb des Synchronisationsverbundes.

Aus der Druckschrift EP 0 816 963 A2 ist daneben bekannt, dass das Umschalten zwischen den Taktmastern auch durch eine Vorrangliste erfolgen kann. Diese Vorrangliste kann außerdem zyklisch durchlaufen werden, so dass der globale Synchronisationstakt nacheinander für eine bestimmte Zeitspanne von allen Antriebssteuerungen erzeugt wird.

Das Umschalten zwischen den Synchronisationstaktmastern bedarf jedoch einer gewissen Mindestzeit. Während dieser Schaltzeit fällt das Druckwerk unter Umständen aus.

Die Aufgabe der vorliegenden Erfindung besteht somit darin, die Ausfallzeit eines Druckwerks beim Umschalten auf einen anderen Taktmaster zu minimieren.

Erfindungsgemäß wird diese Aufgabe gelöst durch ein Bussystem zur Steuerung einer Komponente einer Druckmaschine mit mehreren Slaves als Buskomponenten und einer Takterzeugungseinrichtung zur Ausgabe eines ersten Taktsignals und eines zweiten Taktsignals an die mehreren Slaves, wobei mindestens einer der Slaves eine Auswahleinrichtung zur Auswahl des ersten oder zweiten Taktsignals als zu verwendenden Synchronisationstakt aufweist.

Darüber hinaus ist erfindungsgemäß vorgesehen ein Verfahren zum Betreiben eines Bussystem zur Steuerung einer Komponente einer Druckmaschine durch Ausgeben eines ersten Taktsignals und eines zweiten Taktsignals an mehrere Slaves, die Buskomponenten darstellen, wobei das erste und zweite Taktsignal gleichzeitig ausgegeben werden und mindestens einer der mehreren Slaves das erste oder zweite, anliegende Taktsignal als zu verwendenden Synchronisationstakt auswählt.

Durch das gleichzeitige Senden der mindestens zwei Taktsignale bzw. Takte wird ein fliegendes, sofortiges Umschalten ermöglicht. Das bedeutet für eine Druckmaschine, dass kein Papierriss oder kein Anhalten der Produktion durch das Umschalten droht. Dies erweist sich als ausgesprochen wichtig bei zeitkritischen Zeitungsdruckmaschinen, denn zwischen dem Druckbeginn nach dem Redaktionsschluss und der Auslieferung der Zeitungen liegen häufig nur drei bis vier Stunden. Für diese Anwendungsbereiche ist durch die Erfindung ein sehr hoher Nutzen zu erwarten.

Die Auswahleinrichtung eines Slaves kann zur Durchführung einer selbständigen Auswahl ausschließlich auf der Grundlage internen Informationen ausgebildet sein. Damit ist es möglich, dass der Slave beispielsweise aufgrund eines Zeitkriteriums eine Taktauswahl trifft. Dementsprechend könnte ein zuerst eintreffendes Taktsignal als Synchronisationstakt anerkannt werden, wohingegen später eintreffende Taktsignale ignoriert werden.

Alternativ kann das erfindungsgemäße Bussystem eine Steuerkomponente zum Senden eines Taktsteuersignals aufweisen, so dass die Auswahl der Auswahleinrichtung des mindestens einen Slaves für eines der Taktsignale auf der Grundlage des Taktsteuersignals durchführbar ist. Auf diese Weise kann die Auswahl der Taktsteuersignale durch den Slave zentral gesteuert werden und ist leichter nachvollziehbar.

Bei einer bevorzugten Ausführungsform sind an jeden der mehreren Slaves des Bussystems zwei Datenleitungen angeschlossen, die in jedem Slave miteinander in Verbindung stehen und die außerhalb jedes Slaves so verschaltet sind, dass ein geschlossener Kommunikationsring gebildet ist. Durch diese Art der Verschaltung ist es möglich, dass einzelne Antriebsregler während des Betriebs, d. h. bei laufender Kommunikation, ausgetauscht werden. Die einzelnen Antriebsregler des Bussystems erhalten dann in jedem Fall über eine Ringhälfte Daten- bzw. Taktsignale, so dass ein Ausfall des Druckwerks verhindert werden kann.

Die Takterzeugungseinrichtung kann mindestens zwei voneinander getrennte Taktmaster umfassen, von denen einer zur Abgabe des ersten Taktsignals und ein anderer zur Abgabe des zweiten Taktsignals ausgebildet ist. Diese Ausführungsform hat den Vorteil, dass die Taktmaster physisch voneinander getrennt sind und ein Ausfall beider Systeme damit sehr unwahrscheinlich ist. Die einzelnen Taktmaster können dabei jeweils in einen Antriebsregler integriert sein.

Alternativ kann die Takterzeugungseinrichtung aber auch einen einzigen Taktmaster zur Ausgabe sowohl des ersten als auch des zweiten Taktsignals umfassen. Dadurch kann eine Reduktion der Systemkosten erreicht werden und das Taktsignal des Taktmasters wird mit Hilfe von zwei Leitungen in zwei Taktsignale aufgespaltet und den einzelnen Antriebsreglern bzw. Slaves physisch getrennt zugeleitet.

Das Bussystem kann so ausgestaltet sein, dass an mindestens einen der Slaves ein Unterbussystem mit den gleichen Merkmalen wie das oben beschriebene Bussystem angeschlossen ist. Dadurch besteht die Möglichkeit, dass mehrere Bussysteme mit erfindungsgemäßer Topologie durch ein übergeordnetes Bussystem gleicher oder ähnlicher Struktur miteinander verbunden werden. Im konkreten Fall können somit mehrere Kommunikationsringe durch einen übergeordneten Kommunikationsring miteinander verschaltet werden.

Eine bevorzugte Anwendung des erfindungsgemäßen Bussystems ergibt sich für Druckmaschinen bzw. deren Komponenten in der Druckindustrie, was oben bereits angedeutet wurde. Als Komponente einer Druckmaschine sei hier insbesondere eine Druckeinheit oder eine Falzeinheit genannt.

Die vorliegende Erfindung wird nun anhand der beigefügten Zeichnungen näher erläutert, in denen zeigen:
- FIG 1: eine Kommunikations-Topologie eines H-Druckwerks in schematischer Darstellung; und
- FIG 2: eine Kommunikations-Topologie einer Zeitungsdruckmaschine in ebenfalls schematischer Darstellung.

Das nachfolgend näher geschilderte Ausführungsbeispiel stellt eine bevorzugte Ausführungsform der vorliegenden Erfindung dar.

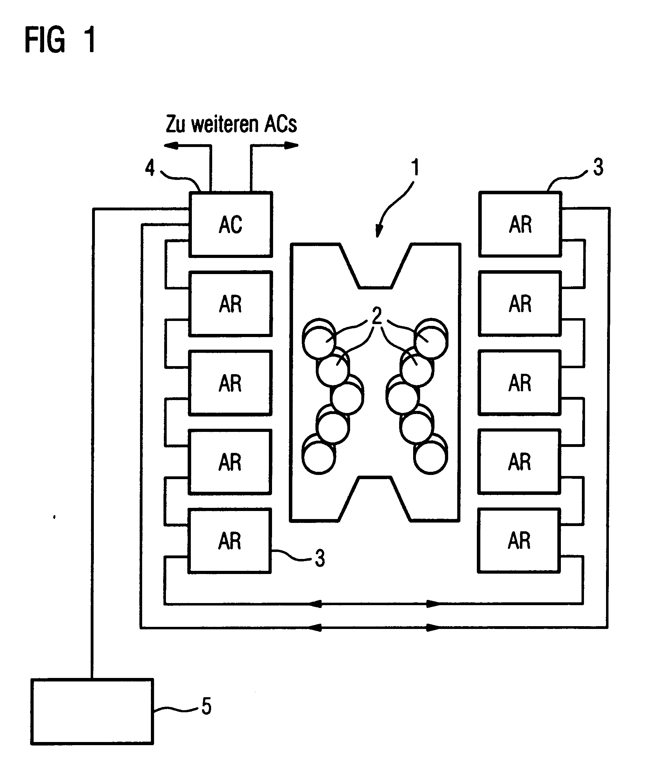

Das in FIG 1 symbolisierte Druckwerk 1 besteht aus mehreren Druckzylindern 2, mit denen sich eine H-förmige Anordnung ergibt. Jeder der Druckzylinder 2 wird durch einen Antriebsregler AR 3 geregelt bzw. gesteuert. Einer der Antriebsregler ist als Antriebscontroller AC 4 ausgestaltet. Dieser Antriebscontroller 4 besitzt die Funktionalität eines Antriebsreglers 3 und darüber hinaus Leitachs-Funktionalität sowie ein Interface für eine Steuerung 5.

Die Antriebsregler 3 sind in einer Ringstruktur verschaltet. Dies bedeutet, dass jeder Antriebsregler 3 mit seinen beiden unmittelbaren Nachbarn verbunden ist. Dementsprechend besitzt jeder Antriebsregler 3 jeweils zwei Anschlussleitungen, die zur bidirektionalen Datenkommunikation ausgelegt sind.

Über die Verbindungsleitungen werden die vom Antriebs-Controller 4, von der Steuerung 5 oder von mehreren Antriebsreglern 3 bzw. Slaves erzeugten Taktsignale an die einzelnen Antriebsregler 3 über zwei getrennte Wege weitergeleitet. Der erste Weg erfolgt in einer Richtung über den Kommunikationsring und der zweite Weg in der entsprechenden Gegenrichtung. Zur Gewährleistung der Ringstruktur sind die beiden Anschlüsse jedes Antriebsreglers 3 intern miteinander gekoppelt, so dass ein Taktsignal, das an einem Anschluss des Antriebsreglers 3 anliegt, an den anderen Anschluss durchgeschleift wird.

An jedem Antriebsregler liegen somit zwei Taktsignale an, die als Synchronisationstakt verwendet werden können.

Vorzugsweise werden zwei der Antriebsregler 3 zu Taktmastern erklärt. Beide senden gleichzeitig ihren eigenen Synchronisationstakt an die anderen angeschlossenen Antriebsregler 3. Jeder Slave bzw. Antriebsregler 3 kann dann selbst entscheiden, auf welchen Takt er achtet. Die Entscheidung erfolgt derart, dass derjenige Takt als Synchronisationstakt angesehen wird, der als Erster erkannt wird.

Bei einer alternativen Ausführungsform erhält jeder Antriebsregler 3 bzw. Slave von einer übergeordneten Steuerung, z. B. dem Antriebs-Controller 4 oder der Steuerung 5, ein Signal, das denjenigen Takt angibt, der zur Synchronisation verwendet werden soll.

Bei Ausfall eines der beiden anliegenden Taktsignale schalten alle Slaves intern auf das andere Taktsignal bzw. den anderen Taktmaster um. Je nach Ausführungsform erfolgt dieses Umschalten allein aufgrund der Tatsache, dass ein zweites Taktsignal nicht mehr anliegt oder aufgrund des Steuersignals von der übergeordneten Stelle.

Der in der Figur dargestellte Kommunikationsring hat nun den Vorteil, dass ein beliebiger Antriebsregler 3 aus dem Bussystem, d. h. dem Kommunikationsring, entnommen werden kann, ohne dass der Synchronisationstakt unterbrochen wäre. Dies liegt darin, dass jeder Antriebsregler 3 von zwei Seiten, d.h. über die beiden Ringhälften, ein Taktsignal erhält, und wenn eine Hälfte ausfällt, ein Taktsignal immer noch über die andere Seite des Rings an dem jeweiligen Antriebsregler 3 anliegt. Auf diese Weise ergibt sich über den geschlossenen Kommunikationsring eine Redundanz durch den zweiten Kommunikationskanal. Dabei ist die Redundanz durch die jeweils zwei Anschlüsse an jedem Antriebsregler 3 auf physikalischer Ebene gegeben.

Wie bereits angedeutet wurde, kann ein Antriebsregler 3 aus dem System entnommen bzw. abgezogen werden, wenn er beispielsweise defekt ist. Bei der in der Figur dargestellten Kommunikations-Topologie können auch zwei unmittelbar benachbarte Antriebsregler 3 aus dem System entnommen werden, ohne dass die anderen Antriebsregler beeinträchtigt wären. Zwei auseinanderliegende Antriebsregler könnten jedoch nicht aus dem System abgezogen werden, da die dazwischenliegenden Antriebsregler dann nicht mit einem Takt versorgt wären.

Das Umschalten auf den jeweiligen Takt bzw. das Auswerten der beiden anliegenden Taktsignale erfolgt in jedem Antriebsregler selbständig. Dementsprechend können die Antriebsregler des Druckwerks während des Betriebs mit unterschiedlichen Takten synchronisiert sein.

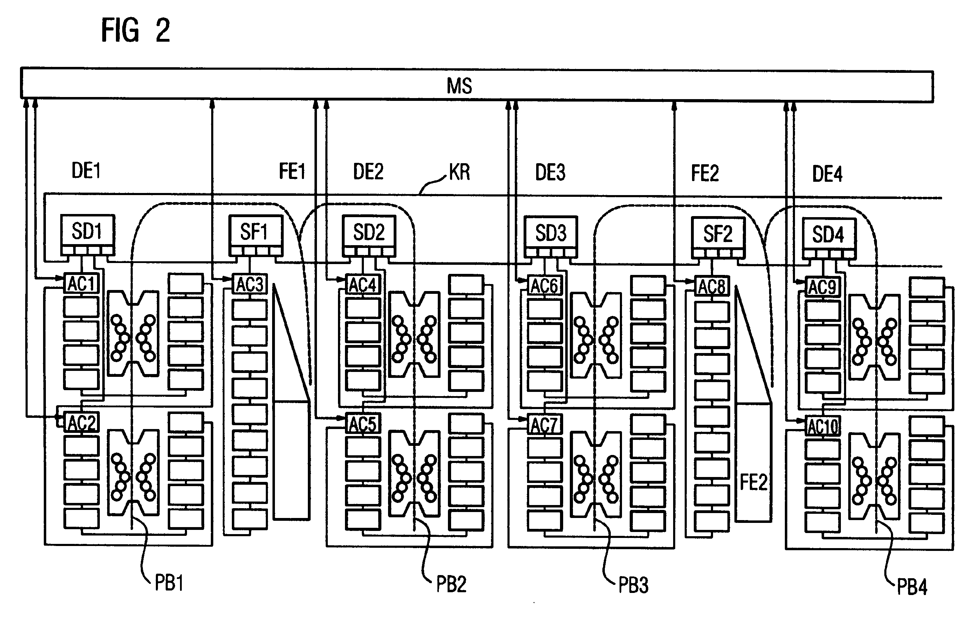

FIG 2 zeigt ein Beispiel einer Kommunikations-Topologie einer Zeitungsdruckmaschine. Die hier schematisch wiedergegebene Druckmaschine besteht aus mindestens acht Druckwerken, wie sie in FIG 1 dargestellt sind. Jeweils zwei Druckwerke sind zu einer Druckeinheit DE1, DE2, DE3 und DE4 zusammengefasst. Zwischen jeweils zwei Druckeinheiten befindet sich eine Falzeinheit FE1 und FE2. Diese verarbeiten das von den Druckeinheiten stammende Papier weiter. Entsprechende Papierbahnen PB1, PB2, PB3 und PB4 sind in FIG 2 angedeutet.

Jedes der Druckwerke und jede Falzeinheit verfügt über ein ringförmig ausgeprägtes Bussystem. Jedes einzelne dieser in FIG 2 wiedergegebenen Bussysteme verfügt über einen Antriebscontroller AC1 bis AC10. In jeder Druckeinheit DE1 bis DE4 und Falzeinheit FE1, FE2 ist jeweils ein Switch SD1, SF1, SD2, SD3, SF2, SD4 vorgesehen. Der Switch jeder Druck- oder Falzeinheit steuert den/die Arbeitscontroller dieser Einheit an. Die Switches SD1, SF1, SD2, SD3, SF2 und SD4 sind ihrerseits mit einem Maschinenkommunikationsring KR ringförmig verschaltet. Damit sind die Unterkommunikationsringe der einzelnen Druckwerke bzw. Falzeinheiten mit Hilfe des übergeordneten Maschinenkommunikationsrings KR miteinander in Verbindung. Eine zentrale Maschinensteuerung MS steht mit den einzelnen Antriebscontrollern A1 bis A10 bidirektional in Verbindung. Durch diese erfindungsgemäße Topologie ist gewährleistet, dass nicht nur innerhalb eines Bussystems eines Druckwerks oder einer Falzeinheit, sondern auch innerhalb eines übergeordneten Kommunikationsrings KR, der das Zusammenwirken der einzelnen Einheiten der Zeitungsdruckmaschine koordiniert, mehrere Taktsignale zur Auswahl stehen. Erfindungsgemäß kann somit in jeder Systemebene die Ausfallwahrscheinlichkeit jeder Komponente reduziert werden.

## Patentansprüche

1. Bussystem zur Steuerung einer Komponente einer Druckmaschine mit
- mehreren Slaves (3, 4) als Buskomponenten und
- einer Takterzeugungseinrichtung zur Ausgabe eines ersten Taktsignals und eines zweiten Taktsignals an die mehreren Slaves (3, 4),
**dadurch gekennzeichnet, dass**
- mindestens einer der Slaves eine Auswahleinrichtung zur Auswahl des ersten oder zweiten Taktsignals als zu verwendenden Synchronisationstakt aufweist.

2. Bussystem nach Anspruch 1, wobei die Auswahleinrichtung zur Durchführung einer Auswahl auf der Grundlage ausschließlich interner Informationen ausgebildet ist.

3. Bussystem nach Anspruch 1, das eine Steuerkomponente zum Senden eines Taktsteuersignals aufweist, so dass die Auswahl der Auswahleinrichtung des mindestens einen Slaves für eines der Taktsignale auf der Grundlage des Taktsteuersignals durchführbar ist.

4. Bussystem nach einem der vorhergehenden Ansprüche, wobei an jedem der mehreren Slaves (3, 4) zwei Datenleitungen angeschlossen sind, die in jedem Slave (3, 4) miteinander in Verbindung stehen und die außerhalb jedes Slaves (3, 4) so verschaltet sind, dass ein geschlossener Kommunikationsring gebildet ist.

5. Bussystem nach einem der vorhergehenden Ansprüche, wobei die Takterzeugungseinrichtung zwei voneinander getrennte Taktmaster umfasst, von denen einer zur Abgabe des ersten Taktsignals und der andere zur Abgabe des zweiten Taktsignals ausgebildet ist.

6. Bussystem nach einem der Ansprüche 1 bis 4, wobei die Takterzeugungseinrichtung einen einzigen Taktmaster zur Ausgabe sowohl des ersten als auch des zweiten Taktsignals umfasst.

7. Bussystem nach einem der vorhergehenden Ansprüche, wobei an mindestens einen der Slaves ein Unterbussystem mit den Merkmalen eines Bussystems nach einem der vorhergehenden Ansprüche angeschlossen ist.

8. Druckmaschine mit einer Komponente (DE1 bis DE4, FE1, FE2), die über ein Bussystem nach einem der vorhergehenden Ansprüche angesteuert oder gesteuert ist.

9. Druckmaschine nach Anspruch 8, wobei die Komponente (DE1 bis DE4, FE1, FE2) eine Druckeinheit oder eine Falzeinheit ist.

10. Verfahren zum Betreiben eines Bussystems zur Steuerung einer Komponente einer Druckmaschine durch
- Ausgeben eines ersten Taktsignals und eines zweiten Taktsignals an mehrere Slaves (3, 4), die Buskomponenten darstellen,
**dadurch gekennzeichnet, dass**
- das erste und zweite Taktsignal gleichzeitig ausgegeben werden und
- mindestens einer der mehreren Slaves das erste oder zweite, anliegende Taktsignal als zu verwendenden Synchronisationstakt auswählt.

11. Verfahren nach Anspruch 10, wobei das Auswählen eines Takts durch einen der mehreren Slaves (3, 4) auf der Grundlage ausschließlich interner Informationen erfolgt.

12. Verfahren nach Anspruch 10, wobei in dem Bussystem ein Taktsteuersignal für die Slaves (3, 4) zur Verfügung gestellt wird, anhand dessen die Slaves (3, 4) ein zu verwendendes Taktsignal auswählen.

13. Verfahren nach einem der Ansprüche 10 bis 12, wobei jeder der mehreren Slaves (3, 4) mit zwei Datenleitungen angesteuert wird, die in jedem Slave (3, 4) miteinander in Verbindung stehen und die außerhalb jedes Slaves (3, 4) so verschaltet sind, dass ein geschlossener Kommunikationsring bebildet wird.

14. Verfahren nach einem der Ansprüche 10 bis 13, wobei das erste Taktsignal und das zweite Taktsignal jeweils von unterschiedlichen Taktmastern erzeugt werden.

15. Verfahren nach einem der Ansprüche 10 bis 13, wobei das erste Taktsignal und das zweite Taktsignal gemeinsam von einem einzigen Taktmaster erzeugt werden.
